# EUROPÄISCHE PATENTSCHRIFT

(11) **EP 2 407 240 B1**
(45) Veröffentlichungstag und Bekanntmachung des Hinweises auf die Patenterteilung: **27.05.2015**
(21) Anmeldenummer: 10169895.9
(22) Anmeldetag: 16.07.2010
(51) Int. Cl.: B01J 35/04, B01J 37/34, B01J 19/10, B01J 19/24

(54) **Verfahren zur Erhöhung der Effektivität von katalytischen chemischen Prozessen**
Method for increasing the effectiveness of catalytic chemical processes
Procédé d'augmentation de l'efficacité de processus chimiques catalytiques

(43) Veröffentlichungstag der Anmeldung: 18.01.2012
(73) Patentinhaber: Wagner, Edmund, Dr.-Ing., 65187 Wiesbaden (DE)
(72) Erfinder: Wagner, Edmund, 65187 Wiesbaden (DE)
(74) Vertreter: WSL Patentanwälte Partnerschaft mbB

(56) Entgegenhaltungen:
- US-A1- 2003 086 834
- US-A1- 2008 257 713

## Beschreibung

Diese Erfindung betrifft ein Verfahren zur Erhöhung der Effektivität von katalytischen chemischen Prozessen.

Die Katalyse wird in der chemischen Verfahrenstechnik umfangreich eingesetzt, um Reaktionen zu beschleunigen oder um Reaktionsgleichgewichte in eine bestimmte Richtung zu verschieben. Ein Katalysatortyp ist der Feststoffkatalysator, der die Reaktion von Gasen oder Flüssigkeiten heterogen katalysiert. Beispiele für solche Katalysen sind etwa die Fischer-Tropsch-Synthese (FTS), der Sabatier-Prozess, das Haber-Bosch-Verfahren oder eine Vielzahl von anderen Reaktionen, die mit Feststoffkatalysatoren ablaufen. Der Katalysator kann beispielsweise in einem Festbettreaktor in Form einer Schüttung oder Packung aus Feststoffpartikeln eingesetzt werden. Die Partikel der Schüttung oder Packung können dabei aus dem Katalysatormaterial bestehen oder damit beschichtet sein. Eine Alternative dazu sind Monolithreaktoren, bei denen der Katalysator einstückig oder aus fest miteinander verbundenden Bauteilen, die gemeinsam einen zusammenhängenden Katalysatorkörper bilden, aufgebaut ist.

In Monolithreaktoren nähern sich die Edukte einer bestimmten Reaktion dem Katalysatormaterial an, um in einem katalysierten Prozess umgesetzt zu werden. An der Oberfläche des Katalysators treten im Zusammenhang mit der katalytischen Reaktion Physisorption und Chemisorption auf (vgl. Ertl, Reaktionen an Oberflächen: Vom Atomaren zum Komplexen, Angewandte Chemie 2008-120/19, S. 3582 ff.). Die Grenzschicht einer Strömung, die durch den Katalysator verläuft, hat allerdings nur eine sehr geringe Fließgeschwindigkeit und keine Strömungskomponenten in Richtung der Katalysatoroberfläche und kann dadurch für Edukte und Produkte eine Barriere zwischen dem Hauptstrom durch den Katalysator und dem Katalysatormaterial bilden, die üblicherweise nur durch Diffusion durchdrungen werden kann.

Um die Durchmischung des Reaktionsgases zu verbessern, werden Katalysatoren häufig so ausgelegt, dass die Strömung in den Durchtrittsöffnungen durch einen Katalysator turbulent stattfindet (Reynoldszahl Re > 3.000). Dies hat jedoch wiederum den Nachteil, dass bei - häufig erwünschtem - kleinem Durchmesser der Durchtrittsöffnungen für das Medium relativ hohe Strömungsgeschwindigkeiten erforderlich sind, um Turbulenz zu erreichen. Da eine gewisse Reaktionszeit erforderlich ist, sind dann auch entsprechend lange Durchtrittsöffnungen als Reaktionskanäle erforderlich, was wiederum große Abmessungen des Katalysators erfordert.

US 2003/0086834 A1 beschreibt die Anwendung von mechanischen Schwingungen auf den Übergangsbereich zwischen Katalysator und Reaktionssubstanzen in einem katalytischen Reaktor.

US 2008/0257713 A1 beschreibt eine katalytische Vorrichtung, auf deren Reaktor ein von einer Schallquelle erzeugtes akustisches Signal einwirkt.

Aufgabe der Erfindung ist es gegenüber diesem Stand der Technik, bei kleinerer Bauweise der Reaktoren und geringerer Energiezufuhr, das heißt, kleineren Reaktionsdrücken und/oder geringeren Reaktionstemperaturen eine bessere Ausbeute der erstrebten Reaktionsprodukte zu erhalten. Ziel der Erfindung ist es u.a. auf turbulente Strömung verzichten zu können und trotzdem die gewünscht hohen Reaktionsausbeuten zu erreichen.

Diese Aufgabe wird erfindungsgemäß gelöst durch ein Verfahren zur Durchführung einer heterogenen katalytischen chemischen Reaktion in einem Reaktionsfluid, welches einen Katalysator durchströmt und wenigstens ein Edukt umfasst, wobei der Katalysator zur Erhöhung der Effektivität der chemischen Reaktion durch wenigstens einen mechanischen Oszillator mit einer mechanischen Schwingung in dem Bereich von 20 kHz bis 1 GHz beaufschlagt wird, wobei das Verfahren dadurch gekennzeichnet ist, dass der wenigstens eine mechanische Oszillator mit einem Signal mit Pulsamplitudenmodulation angesteuert wird.

In einer Ausführungsform des Verfahrens ist die Schwingungsfrequenz so gewählt, dass die Molekülmasse wenigstens eines Edukts zum Schwingen angeregt wird. Besonders bevorzugt ist dabei die Anregung von Resonanzfrequenzen von Edukt- und Zwischenprodukt-Molekülen.

Vorzugsweise handelt es sich bei dem Katalysator mit dem das erfindungsgemäße Verfahren durchgeführt wird, um einen monolithischen Feststoffkatalysator für die Durchführung einer heterogenen katalytischen chemischen Reaktion in einem Reaktionsfluid, welches den Katalysator durchströmt und wenigstens ein Edukt umfasst, wobei der Katalysator wenigstens eine Durchtrittsöffnung für das Durchströmen des Reaktionsfluids durch den Katalysator aufweist, dadurch gekennzeichnet, dass der Katalysator zur Erhöhung der Effektivität der chemischen Reaktion wenigstens einen mechanischen Oszillator aufweist, mit dem der Katalysator bei der Durchführung der chemischen Reaktion mit einer mechanischen Frequenz in dem Bereich von 20 kHz bis 1 GHz beaufschlagt werden kann.

Durch das erfindungsgemäße Verfahren wird die Überwindung einer in dem Katalysator auftretenden Strömungsgrenzschicht durch mechanische Anregung der Eduktmoleküle in Verbindung mit der mechanischen Bewegung der Katalysatoroberfläche beschleunigt. Durch Frequenzen von 20 kHz bis 1 GHz werden Resonanzfrequenzen vieler Moleküle getroffen, so dass diese besonders große Schwingungsamplituden erreichen. Die Frequenz kann daher auf verschiedene Edukte eingestellt werden. Bei bestimmten Ausführungsformen der Erfindung sind daher Frequenzen in dem Bereich von 20 bis 500 kHz von Vorteil. Bei anderen Ausführungsformen sind Frequenzen in dem Bereich von 100 bis 800 kHz vorteilhaft. Bei weiteren Ausführungsformen sind Frequenzen in dem Bereich von 500 kHz bis 1 GHz vorteilhaft. In besonderen Ausführungsformen kann, insbesondere bei sehr leichten Molekülen, die Frequenz 1 GHz auch überschreiten und beispielsweise in dem Bereich von 1 bis 2 GHz liegen.

Um verschiedene Moleküle geeignet anzuregen, können auch Frequenzgemische mit unterschiedlichen Frequenzen verwendet werden.

Durch die Frequenzbeaufschlagung im genannten Bereich kann bei dem erfindungsgemäßen Verfahren u.a. auf turbulente Strömung verzichtet werden und es können trotzdem die gewünscht hohen Reaktionsausbeuten erreicht werden. Der Vorteil liegt dabei u.a. darin, dass laminare Strömungsverhältnisse im Katalysator deutlich besser und einfacher zu handhaben sind, als turbulente Strömungsverhältnisse.

Vorzugsweise werden die Schwingungen in longitudinaler Richtung angeregt. Dabei wird vorzugsweise der gesamte Körper des Katalysators, der als Reaktor fungiert, in Schwingung versetzt. Alternativ oder zusätzlich können auch transversale Schwingungen angeregt werden, die an bestimmten Stellen des Umfangs von Durchtrittsöffnungen durch den Katalysator als Oberflächenwellen eine Anregung des durchtretenden Reaktionsfluides bewirken können.

In einer weiteren Ausführungsform der Erfindung weist der Katalysator zusätzlich zu einem ersten mechanischen Oszillator einen zweiten mechanischen Oszillator auf, dessen Schwingungsrichtung unter einem Winkel von mindestens 20° zu der Schwingungsrichtung des ersten Oszillators steht. Auch mit diesem zweiten mechanischen Oszillator kann der Katalysator bei der Durchführung der chemischen Reaktion mit einer mechanischen Frequenz in dem Bereich von 20 kHz bis 1 GHz beaufschlagt werden. Bei bestimmten Ausführungsformen der Erfindung liegen die Frequenzen in dem Bereich von 20 bis 500 kHz. Bei anderen Ausführungsformen sind Frequenzen in dem Bereich von 100 bis 800 kHz vorteilhaft. Bei weiteren Ausführungsformen sind Frequenzen in dem Bereich von 500 kHz bis 1 GHz vorteilhaft. In besonderen Ausführungsformen kann, insbesondere bei sehr leichten Molekülen, die Frequenz 1 GHz auch überschreiten und beispielsweise in dem Bereich von 1 bis 2 GHz liegen.

Durch das Vorsehen einer zweiten Richtung der Schwingungsanregung kann eine Durchgangsöffnung in eine Schwingung in zwei Richtungen versetzt werden. Außerdem können durch die zweidimensionale Anregung besondere Schwingungsmuster einzelner Moleküle angeregt werden, deren Bahnen bei entsprechenden Frequenzen und Phasenbeziehungen beispielsweise auf Lissajous-Figuren verlaufen können. Durch geeignete Einstellung der Anregungsfrequenzen beider Oszillatoren können bestimmte Schwingungsbilder fixiert werden, so dass insbesondere in Verbindung mit einer laminaren Strömung in der Durchtrittsöffnung und entsprechend stabilem Strömungsprofil wiederholbare Reaktionsabläufe entstehen, die genau reproduzierbar sind. Es liegen dann in jedem Teil des Katalysators stationäre Strömungsbedingungen und eine reproduzierbare Verbesserung der Reaktionsgeschwindigkeit durch die mechanischen Schwingungen vor. Die Schwingungsrichtung des zweiten Oszillators steht vorzugsweise senkrecht (90°) zu der des ersten Oszillators.

In einer weiteren Ausführungsform der Erfindung weist der Katalysator zusätzlich einen dritten mechanischen Oszillator auf, dessen Schwingungsrichtung unter einem Winkel von mindestens 20° zu der Ebene steht, die die Schwingungsrichtungen des ersten und des zweiten Oszillators aufspannen. Auch mit diesem dritten mechanischen Oszillator kann der Katalysator bei der Durchführung der chemischen Reaktion mit einer mechanischen Frequenz in dem Bereich von 20 kHz bis 1 GHz und/oder in dem Bereich von 1 GHz bis 2 GHz beaufschlagt werden. Bei bestimmten Ausführungsformen der Erfindung liegen die Frequenzen in dem Bereich von 20 bis 500 kHz. Bei anderen Ausführungsformen sind Frequenzen in dem Bereich von 100 bis 800 kHz vorteilhaft. Bei weiteren Ausführungsformen sind Frequenzen in dem Bereich von 500 kHz bis 1 GHz vorteilhaft.

Das Vorsehen eines dritten mechanischen Oszillators erweitert die Möglichkeiten, in dem Reaktionsfluid bestimmte Schwingungsmuster zu erzeugen. Insbesondere wird dadurch ermöglicht, die Oberfläche von Durchtrittsöffnungen, die dreidimensional durch den Katalysator verlaufen, an jeder Stelle in Schwingung zu versetzen, wobei die Schwingungsrichtung wenigstens eine Komponente hat, die senkrecht zu der Oberfläche steht. Dies gilt beispielsweise für Durchtrittsöffnungen, die in Form einer Helix durch den Katalysator verlaufen. Vorzugsweise liegt die Schwingungsrichtung des dritten Oszillators senkrecht zu der Ebene, die aus den Schwingungsrichtungen des ersten und des zweiten Oszillators aufgespannt wird.

In einer weiteren Ausführungsform sind der oder die Oszillatoren so gewählt und eingestellt, dass sich im Reaktionsfluid in der wenigstens einen Durchtrittsöffnung eine stehende Welle quer zur Längsachse der Durchtrittsöffnung ausbildet.

Dazu muss die Anregungsfrequenz so gewählt werden, dass sich in dem Fluid eine Wellenlänge ausbildet, die dem Durchmesser des Kanals entspricht. Die Anregungsfrequenz hängt auch von der Schallgeschwindigkeit in dem Fluid ab. Dabei bewegen sich gegenüberliegende Wandabschnitte parallel zueinander. Alternativ können auch Vielfache der genannten Frequenz verwendet werden, wobei sich entsprechend dem Multiplikator zusätzliche Wellenberge zwischen den Wänden der Durchtrittsöffnung ausbilden. Bei der Verwendung mehrerer Anregungsrichtungen, insbesondere senkrecht zur Durchströmungsrichtung der Durchtrittsöffnung, können sich mehrere stehende Wellen in verschiedenen Richtungen überlagern. Dabei kann an jeder Stelle der Oberfläche ein Schwingungsbauch anliegen, wobei die Schwingungsbäuche zeitlich zueinander verschoben ihr Amplitudenmaximum erreichen können.

Vorzugsweise ist die Schwingungsfrequenz des wenigstens einen Oszillators so gewählt, dass die Molekülmasse wenigstens eines Edukts der chemischen Reaktion zum Schwingen angeregt wird. Weist die Reaktion zwei Edukte auf, ist vorzugsweise die Schwingungsfrequenz wenigstens eines Oszillators so gewählt, dass die Molekülmasse wenigstens des ersten Edukts der chemischen Reaktion zum Schwingen angeregt wird, und die Schwingungsfrequenz wenigstens eines zweiten Oszillators so gewählt, dass die Molekülmasse wenigstens des zweiten Edukts der chemischen Reaktion zum Schwingen angeregt wird.

Die Frequenz wird vorteilhaft so ausgewählt, dass eine Schwingung des Edukts in der Resonanz seiner Moleküle stattfindet. Die Amplituden werden dann besonders groß. Es können auch mehrere verschiedene Frequenzen überlagert werden, um verschiedene Edukte auf ihrer Resonanzfrequenz anzuregen, beispielsweise CO₂-Moleküle und H₂-Moleküle.

In der Durchtrittsöffnung des Katalysators kann - je nach Geometrie der Durchtrittsöffnung und Fließgeschwindigkeit des Fluids - laminare oder auch turbulente Strömung auftreten. Ein Vorteil einer laminaren gegenüber einer turbulenten Strömung ist es, dass die laminare Strömung nicht mit einer Mindestgeschwindigkeit verbunden ist. Dadurch kann erreicht werden, dass auch in kürzeren Durchtrittsöffnungen eine vollständige Reaktion abläuft. Ein Nachteil gegenüber turbulenten Strömungen ist jedoch, dass sich eine wesentlich dickere Grenzschicht ausbildet, die häufig bis in die Mitte der Durchschnittsöffnung zusammenwächst. Es bildet sich dann die typische laminare Rohrströmung mit parabolischer Geschwindigkeitsverteilung aus. Diese laminare Strömung hat keine Geschwindigkeitskomponenten quer zur Längsachse der Durchschnittsöffnung, so dass eine Durchmischung des Fluids quer zur Strömungsrichtung nur durch Diffusion stattfindet.

Bei einer alternativen Ausführungsform der Erfindung ist die mittlere Strömungsgeschwindigkeit des Reaktionsfluids durch eine Durchtrittsöffnung daher so gewählt, dass sich eine turbulente Strömung ausbildet. In einer weiteren Alternative der Erfindung ist die mittlere Strömungsgeschwindigkeit des Reaktionsfluids durch eine Durchtrittsöffnung allerdings so gewählt, dass sich eine laminare Strömung ausbildet, da der oben beschriebene Nachteil der laminaren Strömung durch die Beaufschlagung des Reaktionsfluids mit mechanischen Schwingungen überwunden werden kann, wodurch auch die Moleküle in der Grenzschicht zum Schwingen angeregt werden. Auf diese Weise steigt die Diffusion quer zur Strömungsrichtung und damit die Wahrscheinlichkeit der Berührung eines Eduktmoleküls mit dem Katalysator, was wiederum die Katalyse verbessert.

Bei der Erfindung werden der Oszillator oder die Oszillatoren mit einem Signal mit Pulsamplitudenmodulation angesteuert.

Bei der Pulsamplitudenmodulation werden statt einem kontinuierlichen Signal einzelne Pulse verschiedener Amplituden zur Ansteuerung eines mechanischen Oszillators verwendet. Die Pulse bilden dabei im Wesentlichen ein Sinussignal oder überlagerte Sinussignale nach. Die Frequenz der Pulse ist vorteilhaft höher als die Frequenz der höchsten abgebildeten Sinusfunktion, vorzugsweise mindestens doppelt so hoch, vorzugsweise mindestens fünf mal so hoch oder besonders bevorzugt mindestens zehn mal so hoch. Das Signal zur Ansteuerung des mechanischen Oszillators kann gewonnen werden, indem eine Pulsfolge mit einem Modulationssignal in der Amplitude moduliert wird. Das Modulationssignal ist vorzugsweise eine Sinusschwingung oder mehrere überlagerte Sinusschwingungen. Die Modulation kann von einem Fachmann nach dem Stand der Technik durchgeführt werden.

In einer weiteren Ausführungsform werden der oder die Oszillatoren mit einem Signal mit Pulsfrequenzmodulation oder mit Pulsphasenmodulation entsprechend einem Dirac-Kamm-Signal angesteuert.

Das Signal kann ein Sinussignal, aber auch ein anderer periodischer Signaltyp sein, wie etwa ein Rechteck- oder Dreiecksignal. Mit einem Signal mit Pulsfrequenzmodulation kann beispielsweise ein Signal mit Sinusform oder mehreren überlagerten Sinusfunktionen angenähert werden. Ein Signal mit Pulsfrequenzmodulation kann erzeugt werden, indem eine Pulsfolge so erzeugt wird, dass die zeitliche Dichte der Pulse mit der Amplitude eines Modulationssignals zu- bzw. abnimmt. Entsprechende Verfahren sind einem Fachmann aus dem Stand der Technik, insbesondere in der Nachrichtentechnik, wohlbekannt.

Bei einem Signal mit Pulsphasenmodulation wird die Lage eines Pulses innerhalb eines festen Zeitintervalls von einem Modulationssignal gesteuert. Ein solches Signal kann erzeugt werden, indem aus einem Signal mit gleichmäßigen Pulsabständen einzelne Pulse in Abhängigkeit des Modulationssignals verschieden stark verzögert werden. Entsprechende Verfahren sind dem Fachmann aus dem Stand der Technik im Gebiet der Nachrichtentechnik bekannt.

Ein Dirac-Kamm-Signal besteht im idealisierten Fall aus scharfen Pulsen unendlicher Höhe und infinitesimal kurzer zeitlicher Länge mit festen Abständen. In der Praxis lassen sich unendlich hohe und infinitesimal kurze Pulse nicht realisieren und werden daher durch möglichst kurze und hohe Pulse angenähert. Solche Pulse regen im Idealfall das ganze Frequenzspektrum an. In der Praxis existiert jedoch eine Grenzfrequenz, ab der keine Anregung mehr stattfindet. Durch die wiederholte Beaufschlagung mit einzelnen angenäherten Dirac-Pulsen durch ein Dirac-Kamm-Signal wird diese Anregung wiederholt durchgeführt. Die genannte Grenzfrequenz wird vorteilhaft so gewählt, dass sie höher liegt als die Resonanzfrequenz von Edukten, deren Reaktion durch die Schwingungen beschleunigt werden sollen.

In einer weiteren Ausführungsform werden wenigstens zwei Oszillatoren mit unterschiedlichen Signalen angesteuert.

Auf diese Weise können beispielsweise zwei verschiedene Edukt- oder auch Zwischenprodukt-Moleküle in Resonanz versetzt werden, um so eine Reaktion am Katalysator zu beschleunigen.

Die beiden Signale können auch so gewählt werden, dass sich bestimmte Schwingungsmuster von Molekülen, z. B. in Form von Lissajous-Figuren, ausbilden.

Das erfindungsgemäße Verfahren kann auf einer Anlage zur Durchführung heterogen katalytischer chemischer Reaktionen in einem Reaktionsfluid durchgeführt werden, wobei die Anlage einen Katalysator umfasst.

In einer Ausführungsform der Anlage findet in dieser die Fischer-Tropsch-Synthese statt. In einer weiteren Ausführungsform findet in der Anlage die Sabatier-Synthese statt.

In noch einer weiteren Ausführungsform der Anlage weist diese zusätzlich eine Vorrichtung zur Gewinnung des Edukts CO₂ aus Luft und/oder zusätzlich eine Vorrichtung zur Gewinnung des Edukts H₂ mittels Elektrolyse aus Wasser auf.

In Verbindung mit der Fischer-Tropsch-Synthese oder der Sabatier-Synthese können auf diese Weise Kohlenwasserstoffe aus Luft und Wasser hergestellt werden. Vorteilhaft wird für noch autarkeren Betrieb die erforderliche elektrische Energie aus erneuerbaren Energiequellen gewonnen.

Weitere Vorteile, Merkmale und Anwendungsmöglichkeiten der Erfindung ergeben sich sowohl aus der folgenden Beschreibung bevorzugter Ausführungsformen als auch aus den dazugehörigen Figuren. Es zeigen:
- Fig. 1A:: Schematisch einen Reaktionsablauf in einer Pore eines Katalysators,
- Fig. 1B:: ein Geschwindigkeitsdiagramm des Strömungsprofils in einem Durchtrittskanal durch einen Katalysator mit verschiedenen Strömungsprofilen,
- Fig. 2A:: einen Katalysator mit einem mechanischen Oszillator,
- Fig. 2B:: einen Katalysator mit zwei mechanischen Oszillatoren,
- Fig. 2C:: einen Katalysator mit drei mechanischen Oszillatoren,
- Fig. 3A-C:: eine schematische Darstellung der Erzeugung einer longitudinalen Sinuswelle,
- Fig. 3D:: den Verlauf einer Sinuswelle und den entsprechenden Verlauf einer Longitudinalwelle,
- Fig. 4:: Amplituden- und Frequenzmodulation von Sinuswellen,
- Fig. 5A:: die Amplitudenmodulation von Pulsen mit einer Sinuswelle (Pulsamplitudenmodulation),
- Fig. 5B:: Frequenzmodulation von Pulsen mit einem Sinussignal (Pulsfrequenzmodulation),
- Fig. 5C:: Modulation der Phase eines Pulssignals mit einer Sinuswelle (Pulsphasenmodulation),
- Fig. 6A:: schematische Darstellung eines Pulsverlaufs über der Zeit,
- Fig. 6B:: schematische Darstellung des Verlaufs eines angenäherten Dirac-Stoßes über der Zeit und
- Fig. 6C:: eine schematische Darstellung einer Folge von angenäherten Dirac-Stößen.

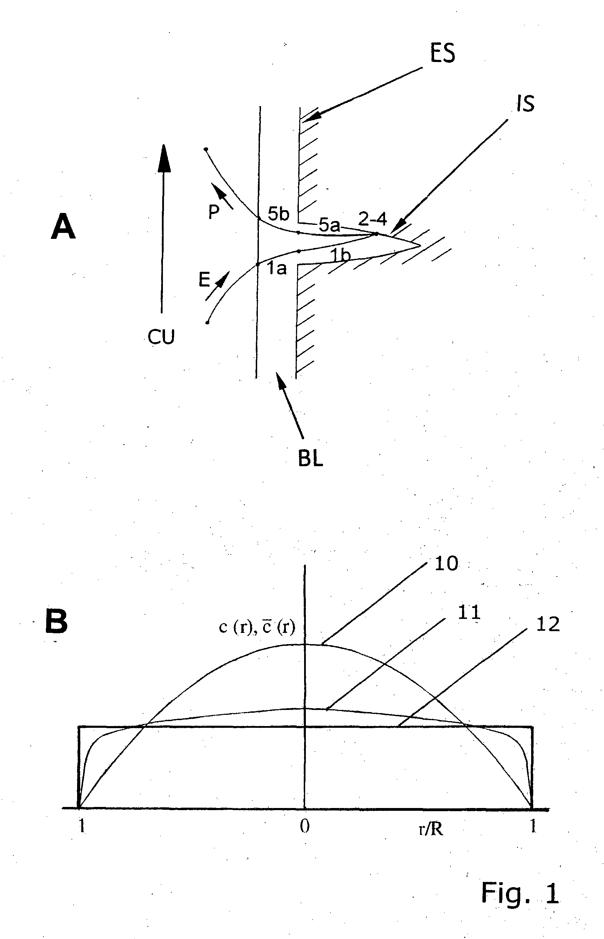

In der Fig. 1A ist schematisch der Ablauf einer Reaktion an der Oberfläche einer Pore eines Katalysators dargestellt. Dabei werden Edukte E mit der Strömung CU des Reaktionsmediums gefördert und gelangen vornehmlich durch Diffusion in die Nähe der Grenzschicht BL. Die Edukte E diffundieren dann durch die Grenzschicht, was als Filmdiffusion 1a bezeichnet wird. Sodann dringen sie mittels Porendiffusion 1b in die Pore ein, wo sie die Wand des Katalysators im Inneren der Pore IS berühren, und dann miteinander reagieren. Dies findet in Form der Vorgänge 2 bis 4 statt, die einem Fachmann als Adsorption/Physisorption 2, Oberflächenreaktion/Chemisorption 3 und Desorption 4, gegebenenfalls auch als Knudsen-Diffusion, bekannt sind. Nach der Reaktion verlässt das Reaktionsprodukt über Porendiffusion 5a die Pore und tritt anschließend mittels Filmdiffusion 5b durch die Grenzschicht BL hindurch. Auf diese Weise steigt die Konzentration des Produkts P in der Strömung CU. Der gleiche Vorgang findet auch an der äußeren Oberfläche des Katalysators ES statt, wobei jedoch die Diffusion in und aus der Pore 1 b und 5a entfällt. Durch die angeregten Schwingungen der Teilchen ergibt sich eine Unterstützung der Diffusionsvorgänge und der Reaktion in quantenchemischer Hinsicht. Poren dienen u.a. der Oberflächenvergrößerung von Katalysatoren. Durch die Frequenzbeaufschlagung gemäß der vorliegenden Erfindung ist das Vorsehen von Poren in Katalysatoren jedoch nicht zwingend notwendig, da der Effekt, der durch Poren erzielt werden kann hier durch die positive Wirkung der Frequenzbeaufschlagung erreicht werden kann. Dennoch kann es bei bestimmten Ausführungsformen von Vorteil sein Katalysatoren sowohl mit Frequenzbeaufschlagung als auch mit Poren vorzusehen.

In der Fig. 1B sind drei verschiedene Strömungsprofile nach dem Stand der Technik dargestellt. In dem Diagramm ist auf der Abszisse der normierte Radius einer Durchtrittsöffnung dargestellt. Die Normierung bezieht sich dabei auf den Gesamtradius, wobei die Mitte der Durchtrittsöffnung als Ursprung 0 definiert ist. Die Koordinaten verlaufen daher von der Mitte der Durchtrittsöffnung bis zu deren Rand. Am Rand beträgt die normierte Koordinate 1. Innerhalb einer Durchtrittsöffnung mit kreisrundem Querschnitt bildet sich ein rotationssymmetrisches Strömungsprofil aus, dessen Querschnitt in einem Diagramm in Fig. 1B für verschiedene Fälle dargestellt ist. Mit 10 ist ein ideales parabolisches Strömungsprofil bei laminarer Strömung bezeichnet. Dabei fließen alle Teilchen parallel in Strömungsrichtung, wobei die Geschwindigkeit zur Wandung hin abnimmt. Durch die Strömung findet somit keine Durchmischung der parallel verlaufenden Stromlinien statt. An der Wandung ist die Geschwindigkeit annähernd 0.

Mit 11 ist der Verlauf einer turbulenten Strömung bezeichnet. Bei einer solchen Strömung liegt eine laminare Grenzschicht vor, die von der Wandung der Durchtrittsöffnung über den geraden Teil der Kurve 11 ab Radius 1 bis etwa zum Beginn zunehmender Krümmung der Kurve reicht. Die Strömung im inneren Teil der Durchtrittsöffnung ist vollständig turbulent, d.h. es liegen auch Geschwindigkeiten quer zur Strömungsrichtung vor, so dass das Reaktionsfluid durchmischt wird. In der laminaren Grenzschicht an der Wandung sind die Stromlinien parallel in der Wandung und es liegt keine Durchmischung des Reaktionsfluids vor.

Eine idealisierte, gleichmäßige Strömung ist mit 12 bezeichnet und als Vergleich an den realen Strömungsprofilen dargestellt. Hier ist die Strömungsgeschwindigkeit über dem gesamten Querschnitt gleich. Eine solche Strömung kommt in der Praxis nicht vor. Sie kann allenfalls durch extrem hohe Fluidgeschwindigkeit mit sehr starker Turbulenz angenähert werden, wobei die Grenzschicht sehr dünn wird.

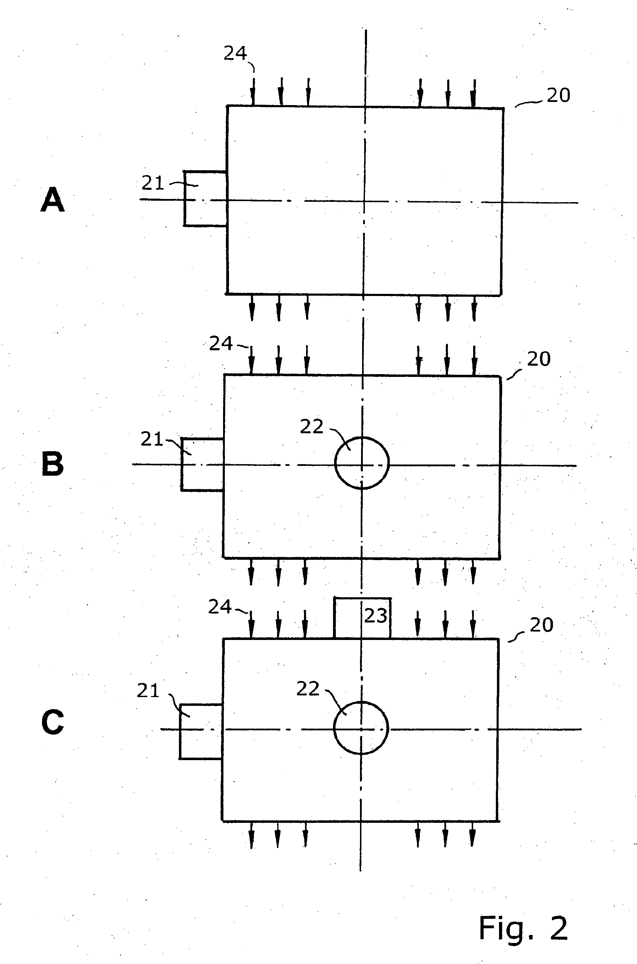

In der Fig. 2A ist ein Katalysator 20 mit einem mechanischen Oszillator 21 dargestellt. Dieser ist in einer bevorzugten Ausführungsform an einer äußeren Oberfläche des Katalysators angeordnet. Seine Schwingungsrichtung liegt senkrecht zur Katalysatoroberfläche, so dass mechanische Longitudinalwellen in den Katalysator eingebracht werden. Der Katalysator wird von Fluid 24 durchströmt.

In der Fig. 2B ist eine weitere Ausführungsform des Katalysators gezeigt. Zusätzlich zu dem mechanischen Oszillator 21 ist in dieser Ausführungsform ein weiterer mechanischer Oszillator 22 auf einer äußeren Oberfläche des Katalysators 20 angeordnet. Seine Schwingungsrichtung liegt senkrecht zur Katalysatoroberfläche, so dass mechanische Longitudinalwellen in den Katalysator eingebracht werden. Die Bewegungsrichtung des mechanischen Oszillators 22 steht dabei senkrecht zur Bewegungsrichtung des mechanischen Oszillators 21. Die weiteren gezeigten Merkmale sind mit dem Katalysator gemäß der Fig. 2A identisch.

In der Fig. 2C ist ein weiterer Katalysator nach der Erfindung schematisch gezeigt. Es handelt sich um einen Katalysator gemäß der Fig. 2B, der durch einen dritten mechanischen Oszillator auf einer dritten äußeren Oberfläche des Katalysators erweitert ist. Seine Schwingungsrichtung liegt senkrecht zur Katalysatoroberfläche, so dass mechanische Longitudinalwellen in den Katalysator eingebracht werden. Alle mechanischen Oszillatoren 21, 22 und 23 sind dabei jeweils rechtwinklig zueinander angeordnet. Ihre Bewegungsrichtungen spannen ein kartesisches Koordinatensystem auf.

Alternativ können die mechanischen Oszillatoren in den Ausführungsformen nach den Fig. 2A, 2B und 2C auch versenkt oder im Inneren des Katalysators angeordnet sein.

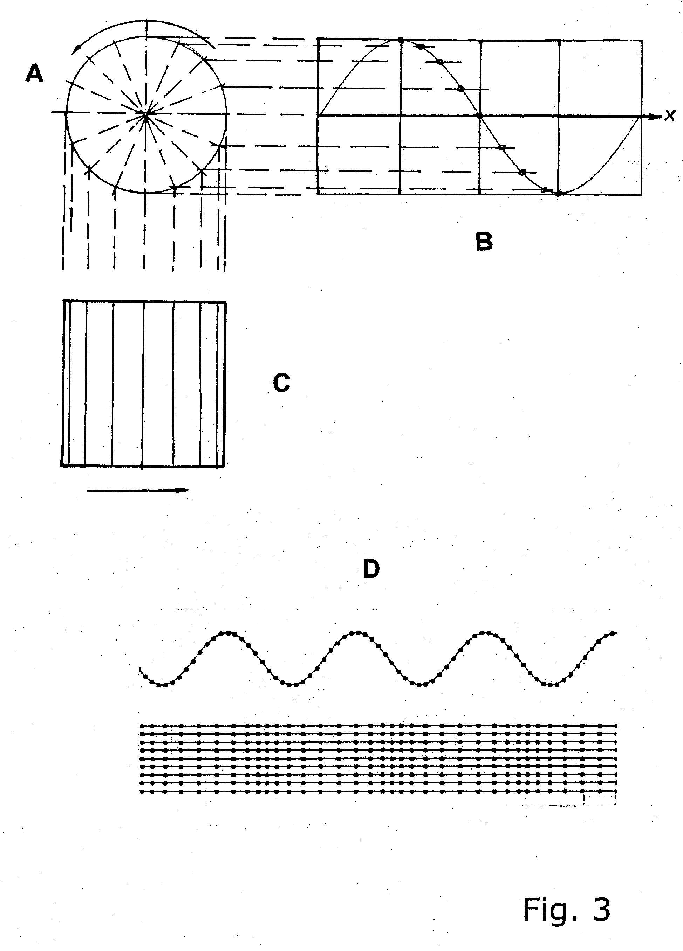

In den Fig. 3A, 3B und 3C ist gezeigt, wie eine mechanische Transversalwelle zu verstehen ist. In der Fig. 3C ist ein Ausschnitt aus einem Fluid oder einem Feststoff gezeigt, in dem eine mechanische Transversalwelle läuft, wie durch den Pfeil unter dem Rechteck angedeutet ist. Es sind dabei als senkrechte Linien Phasen der Welle gezeigt, die einer bestimmten Phasenlage der Schwingung entsprechen. In dem gezeigten Beispiel liegen die Phasen der Welle am Rande des Rechtecks räumlich dichter beisammen als in der Mitte des Rechtecks. Dies ist physikalisch so zu verstehen, dass die Dichte der Teilchen des Fluids oder Feststoffs entlang der Welle nicht gleichmäßig, sondern sinusförmig verteilt ist. Die Dichte der Teilchen in der Welle kann zeichnerisch konstruiert werden, indem aus der Fig. 3A, die einen Einheitskreis mit sechzehn Phasenlagen im Abstand von 22,5° zeigt, die Koordinaten auf die Fig. C, wie durch die gestrichelten Linien angedeutet, übertragen werden. Zur Veranschaulichung, dass es sich um eine Sinuskurve handelt, ist in der Fig. 3B die Konstruktion einer Sinuskurve aus den Phasenlagen in der Fig. 3A gezeigt, wie ebenfalls durch gestrichelte Linien angedeutet ist.

In Fig. 3D ist im unteren Teil eine mechanische Longitudinalwelle gezeigt, die von links nach rechts durch ein Fluid oder einen Feststoff verläuft. Die Welle ist zu einem festen Zeitpunkt dargestellt und durchläuft in der Realität den Feststoff von einer Seite des Diagramms zur anderen, das heißt, bei ablaufender Zeit betrachtet findet eine Bewegung der Sinuskurve durch das Diagramm statt. Die Abstände zwischen den einzelnen Punkten in dem Fluid oder dem Feststoff symbolisieren die Dichte und damit auch den Abstand von Teilchen in dem Feststoff oder dem Fluid. In dem oberen Teil ist eine Sinuskurve dargestellt, die die Abstände zwischen zwei Punkten im unteren Diagramm abbildet. Damit wird veranschaulicht, dass eine Longitudinalwelle, die ein mechanischer Oszillator nach der Erfindung, wie er in einer der Fig. 2A, 2B oder 2C dargestellt ist, auf den Katalysator überträgt, um eine sinusförmige Abstandsverteilung der Teilchen des Fluids oder Feststoffs zur Folge hat.

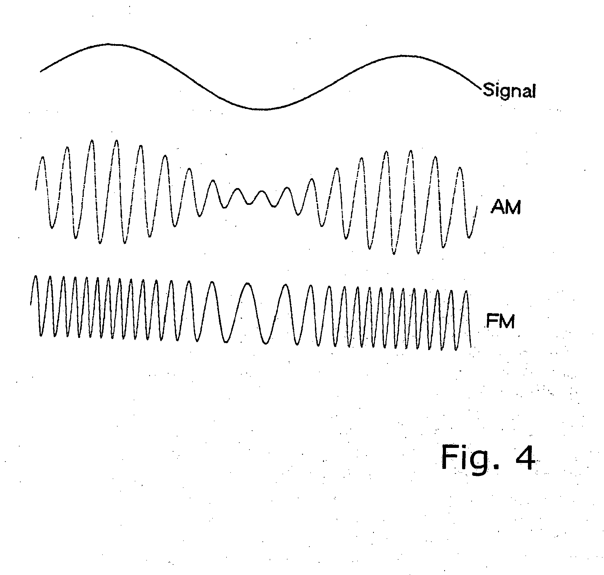

In der Fig. 4 sind Amplituden- und Pulsmodulation veranschaulicht. Oben in der Fig. 4 ist ein sinusförmiges Modulationssignal in seinem zeitlichen Verlauf gezeigt, das mit S bezeichnet ist. Mit diesem wird ein höherfrequentes Signal moduliert.

Unterhalb des Signals S ist ein Signal AM dargestellt, das ein amplitudenmoduliertes Signal zeigt, dessen Frequenz höher ist als die des Modulationssignals S. Die Amplitude des modulierten Signals AM entspricht jeweils der Stärke des Signals S. Dabei bleibt jedoch die Grundstruktur des höherfrequenten Signals erhalten.

Unten in der Fig. 4 ist ein frequenzmoduliertes Signal abgebildet. Dieses hat eine variable Frequenz, die mit der Amplitude des Signals S zusammenhängt. Bei geringer Amplitude des Signals S sinkt die Frequenz des frequenzmodulierten Signals, wogegen sie bei einer Erhöhung der Amplitude des Signals S steigt. Dementsprechend ergibt sich in dem frequenzmodulierten Signal eine Änderung der Periodendauer der einzelnen Schwingungen. Diese ändern sich sinusförmig.

Werden auf einen Katalysator derartige modulierte Signale gegeben, so können die Resonanzfrequenzen verschiedener Moleküle getroffen werden.

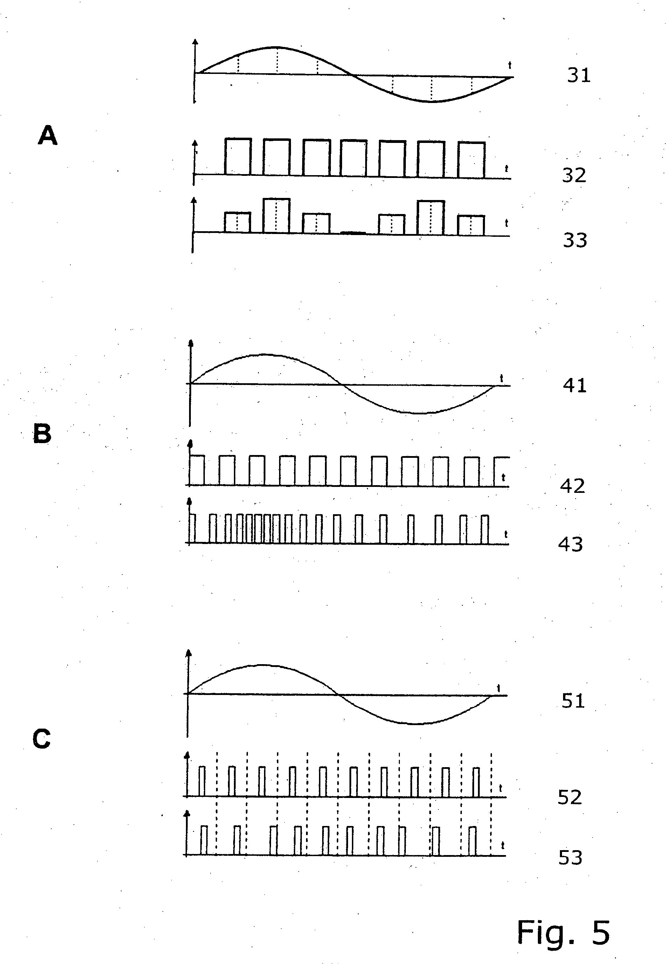

In Fig. 5A ist die Erzeugung einer amplitudenmodulierten Pulsfolge gezeigt. Auf eine Pulsfolge 32 wird das sinusförmige Modulationssignal 31 aufmoduliert, so dass Pulse mit verschiedenen Amplituden entstehen, die in dem Diagramm 33 dargestellt sind. Ein Katalysator kann mit einem solchen amplitudenmodulierten Pulssignal beaufschlagt werden, wodurch durch

Änderungen am Modulationssignal Frequenz und Amplitude das amplitudenmodulierte Pulssignal auf einfache Weise eingestellt werden können.

In Figur 5B ist die Erzeugung eines frequenzmodulierten Pulssignals 43 dargestellt. Die Pulse eines Pulssignals 42 werden in Abhängigkeit eines Modulationssignals 41 so verzögert, dass sich das frequenzmodulierte Pulssignal 43 ergibt. Dieses enthält die Frequenz des Pulssignals, die um die Modulationsfrequenz verschoben ist. Dieses kann auf einen mechanischen Oszillator eines Katalysators gegeben werden.

In Figur 5C ist die Erzeugung eines phasenmodulierten Pulssignals 53 dargestellt. Die Pulse eines Pulssignals 52 werden in Abhängigkeit eines Modulationssignals 52 so vergrößert, dass sich das phasemodulierte Pulssignal 53 ergibt. Die Pulse bleiben im Gegensatz zum frequenzmodulierten Pulssignal jedoch innerhalb ihrer jeweils fest vorgegebenen zeitlichen Fenster.

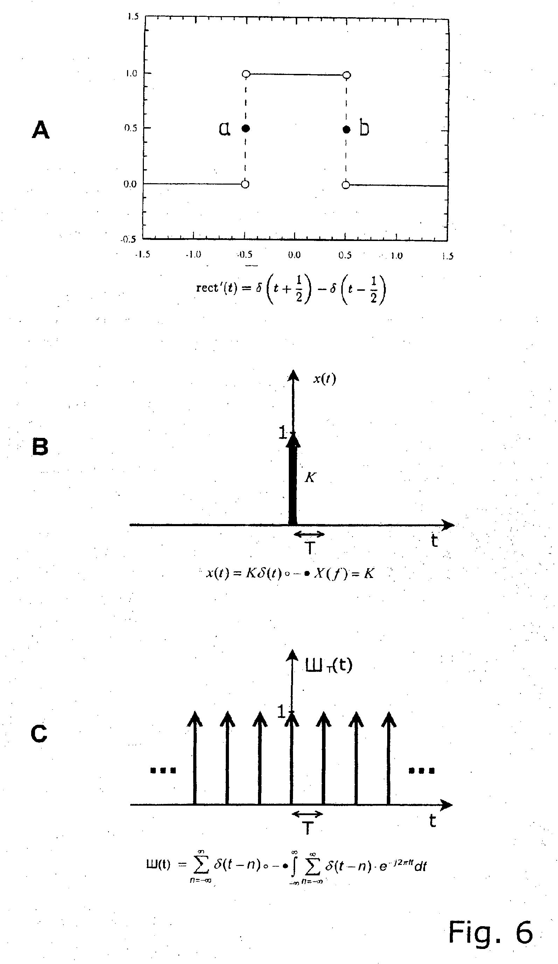

In Fig. 6A ist die theoretische Erzeugung eines Rechteckpulses, der auf einen mechanischen Oszillator eines Katalysators gegeben werden kann, gezeigt. In dem Diagramm ist auf Abszisse die Zeit und auf der Ordinate die Amplitude des Pulses abgetragen. Zu einem Zeitpunkt a springt die Amplitude vom Wert 0 auf den Wert 1, wird dort gehalten bis zum Zeitpunkt b, zu dem die Amplitude wieder zurück auf 0 abfällt. Mathematisch lässt sich dies durch die unter dem Diagramm dargestellte Formel wiedergeben.

In Fig. 6B ist in einem Diagramm schematisch ein angenäherter Dirac-Puls gezeigt, der zur Ansteuerung eines der mechanischen Oszillatoren eines Katalysators verwendet werden kann. Mathematisch gesehen ist die Fourier-Transformierte eines Dirac-Impulses δ (t) ein konstanter Wert, was bedeutet, dass in dem Puls im idealisierten Fall ein Gemisch aus allen Frequenzen enthalten ist. In der Praxis hat ein angenäherter Dirac-Impuls jedoch keine unendliche Schärfe, was zur Folge hat, dass Frequenzen nur bis zu einer Maximalfrequenz in dem angenäherten Dirac-Puls enthalten sind. Folglich lassen sich mit einem solchen Puls alle möglichen Resonanzfrequenzen von Teilchen in dem Reaktionsgas bis zur Maximalfrequenz anregen. Vorteilhaft liegt die maximale, in dem angenäherten Dirac-Puls enthaltene Frequenz oberhalb von 1 GHz, bevorzugt über 10 GHz und noch mehr bevorzugt über 100 GHz

In Fig. 6C ist eine Folge von Dirac-Pulsen über der Zeit aufgetragen. Eine Anregung mit solchen angenäherten Dirac-Pulsen kann auf einen der mechanischen Oszillatoren eines Katalysators gegeben werden. Der Katalysator und durchströmendes Reaktionsgas werden dadurch mit einem breiten Frequenzgemisch angeregt. Durch die periodische Wiederholung der angenäherten Dirac-Pulse werden die abklingenden Amplituden der Schwingungen wieder erhöht. Der Abstand zwischen den einzelnen Dirac-Pulsen wird vorteilhaft so gewählt, dass die Schwingungen durch das Abklingen nicht zum Erliegen kommen, sondern vorteilhaft wird der nächste Dirac-Puls auf den Oszillator gegeben, wenn die Amplitude der Schwingungen der Edukte auf 50% zurückgegangen ist.

Interessant wird die vorgestellte Verfahrenstechnik, wenn man auch in der Lage ist, diese quantenmechanisch zu analysieren und zu modellieren. Man bedient sich dabei der sog. Stoßtheorie, wobei hierzu die einzelnen Bereiche von Fig. 6 dienen sollen. Bei A wird ein Stoßverlauf auf der Abszisse von Null ausgehend aufgezeigt. Diese Nulllinie verwandelt sich schlagartig über den Stoß im Bereich bei a, um dann im Stoßmaximum auf der Abszisse von y = 1,0 und der Zeitdauer von x = -0,5 über 0 bis +0,5 anzuhalten und im Bereich b wieder auf y = 0,0 abzufallen. Die Berechnung der Stoßfunktion ist unter der Skizze kurz aufgezeigt worden.

Wenn die Bereiche a und b in der Skizze von A zusammenfallen, somit einen Betrag x annähernd 0 erreichen, gelangt man zu der Skizze im Bereich B von Fig. 6, wo die Stoßfunktion als Pfeil K der Einheitslänge 1 in der Funktion x(t) optisch fixiert wird. Es handelt sich hier um den Dirac-Stoß der Einheitsgröße 1 im Zeitpunkt t = T. Die entsprechende Stoßfunktion x(t) ist darunter aufgezeigt.

Da man es aber nicht nur mit einem Stoß zu tun hat, sondern mit einer Abfolge von Stößen über die Zeit t, erhält man den bekannten Dirac-Kamm, wie er im Bereich C von Fig. 13 zu sehen ist. Unter der Skizze ist die Stoßfunktion des Dirac-Kamms in Gestalt einer δ-Funktion angegeben.

Es wird vorgeschlagen, den Reaktionsraum virtuell als Vektorraum, vorzugsweise als Hilbertraum mit den Koordinaten Zeit t und Impuls p zu betrachten, wobei Wegekoordinaten im Vektorraum nicht vorgesehen sind und der einzelne Zustand durch die Wellenfunktion ψ(x) beschrieben wird. Die Observablen t und p entsprechen hermiteschen Operatoren A...., wobei die Zeitentwicklung der einzelnen Zustände durch die Schrödingergleichung bestimmt wird (s.d.). Es folgt dabei, dass die Wahrscheinlichkeitsdichte für die Position sich als |ψ (x)|² beschreiben lässt.

Wichtig ist dabei, dass jedes Teilchen sich nach Position und Weg auf diese Weise eindimensional beschreiben, d.h. modellieren lässt, was das hiermit angedeutete Ziel dieser quantenmechanischen Betrachtungsweise sein soll und nicht nach der üblichen makroskopischen Vorstellung als undefinierbarer Molekülhaufen, bei dem die wichtige Chemisorption dem Zufall überlassen wird (s. auch Ertl, Reaktionen an Oberflächen: Vom Atomaren zum Komplexen, Angewandte Chemie 2008-120/19, S.3582 ff.).

### Bezugszeichenliste

- BL: Grenzschicht
- CU: Strömung des Reaktionsmediums
- E: Edukt
- ES: Äußere Katalysatoroberfläche
- IS: Pore
- P: Produkt
- S: sinusförmiges Modulationssignal
- AM: amplitudenmoduliertes Signal
- 0: Ursprung
- 1 1a: Filmdiffusion
- 2: Adsorption/Physisorption
- 3: Oberflächenreaktion/Chemisorption
- 4: Desorption/Knudsen-Diffusion
- 5a: Porendiffusion
- 5b: Filmdiffusion
- 10: parabolisches Strömungsprofil
- 11: turbulenter Strömungsverlauf/Kurve
- 12: gleichmäßige Strömung
- 20: Katalysator
- 21,22,23: Oszillator
- 24: Fluid
- 31: Modulationssignal
- 32: Pulsfolge
- 41: Modulationssignal, Amplitudenmoduliertes Pulssignal
- 42: Pulsfolge
- 43: Frequenzmoduliertes Pulssignal
- 51: Modulationssignal
- 52: Pulsfolge
- 53: Phasenmoduliertes Pulssignal

## Patentansprüche

1. Verfahren zur Durchführung einer heterogen katalytischen chemischen Reaktion in einem Reaktionsfluid, welches einen Katalysator durchströmt und wenigstens ein Edukt umfasst, wobei der Katalysator zur Erhöhung der Effektivität der chemischen Reaktion durch wenigstens einen mechanischen Oszillator mit einer mechanischen Schwingung in dem Bereich von 20 kHz bis 2 GHz beaufschlagt wird, **dadurch gekennzeichnet, dass** der wenigstens eine mechanische Oszillator mit einem Signal mit Pulsamplitudenmodulation angesteuert wird.

2. Verfahren nach Anspruch 1, bei dem die Schwingungsfrequenz so gewählt wird, dass die Molekülmasse des wenigstens einen Edukts zum Schwingen angeregt wird.

3. Verfahren nach einem der Ansprüche 1 und 2 **dadurch gekennzeichnet, dass** das Verfahren mit einem monolithischen Feststoffkatalysator durchgeführtwird, den ein Reaktionsfluiddurchströmt, welches wenigstens ein Edukt umfasst, wobei der Katalysator wenigstens eine Durchtrittsöffnung für das Durchströmen des Reaktionsfluids durch den Katalysator aufweist, wobei der Katalysator zur Erhöhung der Effektivität der chemischen Reaktion wenigstens einen mechanischen Oszillator aufweist, mit dem der Katalysator bei der Durchführung der chemischen Reaktion mit einer mechanischen Frequenz in dem Bereich von 20 kHz bis 2 GHz beaufschlagt werden kann, und wobei der wenigstens eine mechanische Oszillator mit einem Signal mit Pulsamplitudenmodulation angesteuert wird

4. Verfahren nach einem der vorangehenden Ansprüche, **dadurch gekennzeichnet, dass** der Katalysator zusätzlich zu einem ersten mechanischen Oszillator einen zweiten mechanischen Oszillator aufweist, dessen Schwingungsrichtung unter einem Winkel von.mindestens 20° zu der Schwingungsrichtung des ersten Oszillators steht, mit dem der Katalysator bei der Durchführung der chemischen Reaktion mit einer mechanischen Frequenz in dem Bereich von 20 kHz bis 2 GHz beaufschlagt wird.

5. Verfahren nach Anspruch 4, **dadurch gekennzeichnet, dass** der Katalysator zusätzlich einen dritten mechanischen Oszillator aufweist, dessen Schwingungsrichtung unter einem Winkel von mindestens 20° zu der Ebene steht, die die Schwingungsrichtungen des ersten und des zweiten Oszillators aufspannen, mit dem der Katalysator bei der Durchführung der chemischen Reaktion mit einer mechanischen Frequenz in dem Bereich von 20 kHz bis 2 GHz beaufschlagt wird.

6. Verfahren nach einem der Ansprüche 3 bis 5, **dadurch gekennzeichnet, dass** der oder die Oszillatoren so gewählt und eingestellt ist/sind, dass sich im Reaktionsfluid in der wenigstens einen Durchtrittsöffnung eine stehende Welle quer zur Längsachse der Durchtrittsöffnung ausbildet.

7. Verfahren nach einem der vorangehenden Ansprüche, **dadurch gekennzeichnet, dass** die Schwingungsfrequenz des wenigstens einen Oszillators so gewählt ist, dass die Molekülmasse wenigstens eines Edukts der chemischen Reaktion zum Schwingen angeregt wird.

8. Verfahren nach einem der Ansprüche 3 bis 6, **dadurch gekennzeichnet, dass** die mittlere Strömungsgeschwindigkeit des Reaktionsfluids durch eine Durchtrittsöffnung so gewählt wird, dass sich eine laminare Strömung ausbildet.

9. Verfahren nach einem der vorangehenden Ansprüche, **dadurch gekennzeichnet, dass** der oder die Oszillatoren mit einem Signal mit Pulsfrequenzmodulation oder mit Pulsphasenmodulation oder mit einem Dirac-Kamm-Signal angesteuert wird/werden.

10. Verfahren nach einem der vorangehenden Ansprüche, **dadurch gekennzeichnet, dass** wenigstens zwei Oszillatoren mit unterschiedlichen Signalen angesteuert werden.

11. Verfahren näch einem der vorangehenden Ansprüche, wobei die chemische Reaktion die Fischer-Tropsch-Synthese ist.

12. Verfahren nach einem der vorangehenden Ansprüche, **dadurch gekennzeichnet, dass** es mit einer Anlage durchgeführt wird, die zusätzlich eine Vorrichtung zur Gewinnung des Edukts CO₂ aus Luft und/oder zusätzlich eine Vorrichtung zur Gewinnung des Edukts H₂ mittels Elektrolyse aus Wasser aufweist.

## Claims

1. Method for carrying out a heterogeneous catalytic chemical reaction in a reaction fluid which flows through a catalyst and comprises at least one educt, wherein at least one mechanical oscillator exposes the catalyst to a mechanical oscillation in the range of from 20 kHz to 2 GHz for increasing the effectiveness of the chemical reaction, **characterized in that** the at least one mechanical oscillator is controlled by a signal with pulse amplitude modulation.

2. Method according to claim 1, wherein the oscillation frequency is chosen such that the molecular mass of at least one educt is excited to oscillate.

3. Method according to one of claims 1 and 2, **characterized in that** the method is carried out with a monolithic solid catalyst, wherein a reaction fluid flows through said catalyst, wherein said reaction fluid comprises at least one educt, wherein the catalyst comprises at least one passage opening for passing of the reaction fluid through the catalyst, wherein the catalyst comprises at least one mechanical oscillator for increasing the effectiveness of the chemical reaction, by which, when carrying out the chemical reaction, the catalyst can be exposed to a mechanical oscillation in the range of from 20 kHz to 2 GHz, and wherein the at least one mechanical oscillator is controlled by a signal with pulse amplitude modulation.

4. Method according to one of the preceding claims, **characterized in that** the catalyst besides a first mechanical oscillator additionally comprises a second mechanical oscillator, the direction of oscillation of which is at an angle of at least 20° to the direction of oscillation of the first oscillator by which, when carrying out the chemical reaction, the catalyst is exposed to a mechanical oscillation in the range of from 20 kHz to 2 GHz.

5. Method according to claim 4, **characterized in that** the catalyst additionally comprises a third mechanical oscillator, the direction of oscillation of which is at an angle of at least 20° to the plane encompassing the directions of oscillation of the first and second oscillators, by which, when carrying out the chemical reaction, the catalyst is exposed to a mechanical oscillation in the range of from 20 kHz to 2 GHz.

6. Method according to one of claims 3 to 5, **characterized in that** the oscillator or oscillators is or are chosen and set such that a standing wave transverse to the longitudinal axis of the passage opening forms in the reaction fluid in the at least one passage opening.

7. Method according to one of the preceding claims, **characterized in that** the oscillation frequency of the at least one oscillator is chosen such that the molecular mass of at least one educt of the chemical reaction is excited to oscillate.

8. Method according to one of claims 3 to 6, **characterized in that** the average speed of the current of the reaction fluid through a passage opening is chosen such that a laminar current forms.

9. Method according to one of the preceding claims, **characterized in that** the oscillator or oscillators is or are controlled by a signal with pulse frequency modulation or with pulse phase modulation or with a Dirac comb signal.

10. Method according to one of the preceding claims, **characterized in that** at least two oscillators are controlled by different signals.

11. Method according to one of the preceding claims, **characterized in that** the chemical reaction is the Fischer-Tropsch synthesis.

12. Method according to one of the preceding claims, **characterized in that** it is carried out in a plant which additionally comprises a device for obtaining the educt CO₂ from air and/or additionally a device for obtaining the educt H₂ by means of electrolysis from water.

## Revendications

1. Procédé de réalisation d'une réaction chimique catalytique hétérogène dans un fluide de réaction qui traverse un catalyseur et qui comprend au moins un éduit, le catalyseur, pour augmenter l'efficacité de la réaction chimique, étant alimenté par au moins un oscillateur mécanique ayant une oscillation mécanique dans la plage de 20 kHz à 2 GHz, **caractérisé en ce que** l'oscillateur mécanique, au moins au nombre de un, est commandé par un signal avec modulation d'impulsions en amplitude.

2. Procédé selon la revendication 1, dans lequel la fréquence d'oscillation est sélectionnée de façon telle que la masse moléculaire de l'éduit, au moins au nombre de un, est excitée en oscillation.

3. Procédé selon l'une des revendications 1 et 2, **caractérisé en ce que** le procédé est conduit avec un catalyseur solide monolithique que traverse un fluide de réaction qui comprend au moins un éduit, le catalyseur présentant au moins une ouverture de passage pour le parcours du fluide de réaction à travers le catalyseur, où le catalyseur, pour augmenter l'efficacité de la réaction chimique, présente au moins un oscillateur mécanique avec lequel le catalyseur, lors de la réalisation de la réaction chimique, peut être alimenté selon une fréquence mécanique dans la plage de 20 kHz à 2 GHz, et où l'oscillateur mécanique, au moins au nombre de un, est commandé par un signal avec modulation d'impulsions en amplitude.

4. Procédé selon l'une des revendications précédentes, **caractérisé en ce que** le catalyseur, en plus d'un premier oscillateur mécanique, présente un deuxième oscillateur mécanique, dont la direction d'oscillation forme un angle d'au moins 20° avec la direction d'oscillation du premier oscillateur avec lequel le catalyseur, lors de la réalisation de la réaction chimique, est alimenté selon une fréquence mécanique dans la plage de 20 kHz à 2 GHz.

5. Procédé selon la revendication 4, **caractérisé en ce que** le catalyseur présente en plus un troisième oscillateur mécanique dont la direction d'oscillation forme un angle d'au moins 20° avec le plan que forment les directions d'oscillation du premier et du deuxième oscillateur, avec lequel le catalyseur, lors de la réalisation de la réaction chimique, est alimenté selon une fréquence mécanique dans la plage de 20 kHz à 2 GHz.

6. Procédé selon l'une des revendications 3 à 5, **caractérisé en ce que** le ou les oscillateurs est/sont sélectionné(s) et réglé(s) de façon telle que se forme dans le fluide de réaction, dans l'ouverture de passage, au moins au nombre de une, une onde fixe perpendiculaire à l'axe longitudinal de l'ouverture de passage.

7. Procédé selon l'une des revendications précédentes, **caractérisé en ce que** la fréquence d'oscillation de l'oscillateur, au moins au nombre de un, est sélectionnée de façon telle que la masse moléculaire d'un éduit de la réaction chimique est excitée en oscillation.

8. Procédé selon l'une des revendications 3 à 6, **caractérisé en ce que** la vitesse moyenne d'écoulement du fluide de réaction par une ouverture de passage est sélectionnée de façon telle qu'il se forme un écoulement laminaire.

9. Procédé selon l'une des revendications précédentes, **caractérisé en ce que** le ou les oscillateurs est/sont commandé(s) par un signal avec modulation d'impulsions en amplitude ou avec modulation d'impulsions en phase ou par un signal en peigne de Dirac.

10. Procédé selon l'une des revendications précédentes, **caractérisé en ce qu'**au moins deux oscillateurs sont commandés par des signaux différents.

11. Procédé selon l'une des revendications précédentes, dans lequel la réaction chimique est la synthèse de Fischer-Tropsch.

12. Procédé selon l'une des revendications précédentes, **caractérisé en ce qu'**il est conduit avec une installation qui présente de plus un dispositif de récupération de l'éduit CO₂ de l'air et/ou de plus un dispositif de récupération de l'éduit H₂ de l'eau au moyen d'une électrolyse.
